(19) Europäisches Patentamt / European Patent Office / Office européen des brevets

(11) **EP 2 902 943 B1**

(12) **FASCICULE DE BREVET EUROPEEN**

(45) Date de publication et mention de la délivrance du brevet:
**12.10.2016 Bulletin 2016/41**

(51) Int Cl.:
***G06K 9/00*** *(2006.01)*

(21) Numéro de dépôt: **15152049.1**

(22) Date de dépôt: **22.01.2015**

(54) **Procédé de validation de l'utilisation d'un vrai doigt comme support d'une empreinte digitale**

Validierungsverfahren für die Verwendung eines echten Fingers als Auflagefläche für einen digitalen Fingerabdruck

Method for validating the use of a real finger as a support for a fingerprint

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.02.2014 FR 1450834**

(43) Date de publication de la demande:
**05.08.2015 Bulletin 2015/32**

(73) Titulaire: **Morpho**
**92130 Issy-les-Moulineaux (FR)**

(72) Inventeurs:
• **Thiebot, M. Alain**
 **92445 ISSY LES MOULINEAUX (FR)**
• **Thouy, Benoît**
 **92445 ISSY LES MOULINEAUX (FR)**
• **Boulanger, Jean-François**
 **92445 ISSY LES MOULINEAUX (FR)**
• **Doublet, Julien**
 **92445 ISSY LES MOULINEAUX (FR)**

(74) Mandataire: **Le Guen-Maillet**
 **5, place de Newquay**
 **BP 70250**
 **35802 Dinard Cedex (FR)**

(56) Documents cités:
 EP-A1- 2 518 684          FR-A1- 2 981 769
 US-A1- 2010 066 697

• MALTONI D ET AL: "Handbook of Fingerprint Recognition, Liveness Detection Techniques", HANDBOOK OF FINGERPRINT RECOGNITION, SPRINGER, LONDON, GB, 1 janvier 2009 (2009-01-01), pages 386-391, XP002607754, ISBN: 978-1-84882-253-5

**Description**

La présente invention concerne un procédé de validation de l'utilisation d'un vrai doigt comme support d'une empreinte digitale, ainsi qu'un dispositif de validation mettant en oeuvre un tel procédé, comme par exemple décrit dans le document US2010/0066697.

Un dispositif d'identification d'un individu par son empreinte digitale consiste en un capteur, un moyen de comparaison, un moyen de prise de décision.

Le capteur présente une surface de capture servant d'appui au doigt et à travers laquelle une image de l'empreinte digitale du doigt est capturée. Le moyen de comparaison compare l'image capturée ou les gabarits biométriques qui sont issus de l'image avec les images ou les gabarits biométriques d'une base de données qui rassemble les images ou gabarits de personnes préalablement enregistrées dans le dispositif d'identification. Le moyen de prise de décision est destiné à prendre une décision quant à l'identification de l'individu à partir du résultat des comparaisons.

Plusieurs technologies existent communément dans le domaine des capteurs d'empreintes digitales pour capturer les images du doigt en contact avec une surface d'acquisition, en particulier des technologies optiques, capacitifs, de mesures de champs électriques, thermiques, ultra-soniques, ou encore par mesure de pression.

Certains individus mal intentionnés tentent de se faire identifier frauduleusement en utilisant des leurres afin d'induire en erreur le dispositif d'identification.

Différents procédés de validation sont connus pour valider le fait que le doigt porteur de l'empreinte digitale est un vrai doigt.

En particulier, il est connu d'utiliser la déformation du doigt sur le capteur pour vérifier si elle correspond bien à de la peau dont les caractéristiques d'élasticité sont différentes de celles des matériaux utilisés pour réaliser les leurres.

En particulier, il est connu de tourner le doigt sur la surface de capture afin d'induire une distorsion de l'image ce qui permet d'analyser l'élasticité de la peau ou du matériau support de la fraude.

Mais un tel procédé n'est pas très ergonomique car un tel mouvement doit être expliqué à l'individu voulant se faire identifier, ce qui n'est pas envisageable, par exemple dans le cas d'un dispositif d'identification qui n'est pas supervisé.

Un objet de la présente invention est de proposer un procédé de validation permettant de valider l'utilisation d'un vrai doigt comme porteur d'une empreinte digitale qui ne présente pas les inconvénients de l'état de la technique, et qui, en particulier, présente une grande ergonomie pour l'individu.

A cet effet, est proposé un procédé de validation de l'utilisation d'un vrai doigt comme support d'une empreinte digitale mis en oeuvre par un dispositif de validation comportant une surface de capture sur laquelle ledit support vient en appui, un capteur destiné à capturer une image de l'empreinte digitale, un module de traitement et un module de prise de décision, ledit procédé de validation comportant:

- une étape de positionnement au cours de laquelle le support est mis en appui contre la surface de capture,
- une étape de capture au cours de laquelle le capteur capture une image dite capturée de l'empreinte,
- une étape de filtrage au cours de laquelle le module de traitement transforme l'image capturée en une image résultante par passage à travers un filtre passe-bas dont la fréquence de coupure est très inférieure à la fréquence des crêtes d'une empreinte,
- une étape de localisation au cours de laquelle le module de traitement localise sur l'image résultante, un point origine O dont l'intensité du pixel est représentative de la pression maximale s'exerçant sur le support,
- une étape de vérification au cours de laquelle le module de traitement vérifie que, sur l'image résultante, pour une pluralité de rayons issus du point origine O, et pour chacun desdits rayons, pour une pluralité de points M, l'intensité du pixel de chaque point M dudit rayon est représentative d'une baisse de la pression s'exerçant sur le support au fur et à mesure que la distance du point origine O au point M augmente, et
- une étape de prise de décision au cours de laquelle le module de prise de décision prend une décision quant à la validité du support en fonction des résultats de l'étape de vérification.

Avantageusement, ladite fréquence de coupure est de l'ordre de de 0,1 à 1 cycle par mm.

Avantageusement, l'étape de vérification consiste à vérifier qu'à partir du point origine O et sur chaque rayon issu du point origine O, le gradient d'intensité de chaque point M est négatif.

Avantageusement, l'étape de prise de décision est basée sur un critère cumulatif noté $Dism(P, O)$ et représentant l'écart du profil d'intensité du profil réel d'intensité P au modèle théorique d'intensité centré en O d'un vrai doigt et sur une comparaison de cet écart $Dism(P, O)$ par rapport à un seuil.

Avantageusement, l'écart $Dism(P, O)$ est donné par la formule:

$$Dism(P,O) = \frac{1}{Aire(P)} \int_0^{2\pi} \int_0^{R_{max}} L\big(\nabla_r^O P(r,\theta)\big).dr.d\theta \qquad (3)$$

où:

- $\nabla_r^O P(r,\theta)$ est la projection sur la base locale radiale en M relative à O du gradient d'intensité au point M de l'image résultante de coordonnées polaires $(r, \theta)$,
- L est une fonction nulle sur $\mathbb{R}^-$ et croissante sur $\mathbb{R}^{+*}$,
- $R_{max}$ est la distance maximale entre le point origine O et tout point M de l'image résultante, et
- *Aire(P)* est l'aire de la région considérée autour du point M.

Avantageusement, le procédé de validation comporte une étape de prétraitement destinée à améliorer le rendu de l'image résultante, entre l'étape de capture et l'étape de filtrage.

Selon un mode de réalisation particulier, l'étape de prétraitement consiste à appliquer aux pixels (x, y) de l'image capturée, une fonction F(x, y) définie par la formule:

$$F(x,y) = \big(255 - p(x,y)\big).\frac{R_r(x,y)}{R_{ir}(x,y)} \qquad (7)$$

où lorsque le pixel (x, y) n'appartient pas aux pixels des crêtes, $R_r$(x, y) est égal à la valeur moyenne des largeurs locales de crêtes adjacentes de part et d'autre de la vallée incluant le pixel, au niveau dudit pixel, et où lorsque le pixel (x, y) appartient aux pixels des crêtes, $R_r$(x, y) vaut la largeur locale de la crête en ce pixel (x, y), et où lorsque le pixel (x, y) n'appartient pas aux pixels des vallées, $R_{ir}$(x, y) est égal à la valeur moyenne des largeurs locales de vallées adjacentes de part et d'autre de la crête incluant ce pixel, au niveau dudit pixel, et où lorsque le pixel (x, y) appartient aux pixels des vallées, $R_{ir}$(x, y) vaut la largeur locale de la vallée en ce pixel (x, y).

Selon un autre mode de réalisation particulier, l'étape de prétraitement consiste à appliquer aux pixels (x, y) de l'image capturée, une fonction F(x, y) définie par la formule:

$$F(x,y) = \big(255 - p(x,y)\big).\frac{R_r(x,y)}{R_{ir}(x,y)} \qquad (7)$$

où lorsque le pixel (x, y) n'appartient pas au squelette des crêtes, $R_r$(x, y) est nul, et où lorsque le pixel (x, y) appartient au squelette des crêtes, $R_r$(x, y) vaut la largeur locale de la crête en ce pixel (x, y), où lorsque le pixel (x, y) n'appartient pas au squelette des vallées, $R_{ir}$(x, y) est nul, et où lorsque le pixel (x, y) appartient au squelette des vallées, $R_{ir}$(x, y) vaut la largeur locale de la vallée en ce pixel (x, y).

Selon un autre mode de réalisation particulier l'étape de prétraitement consiste à appliquer aux pixels (x, y) de l'image capturée, une fonction F(x, y) définie par la formule:

$$F(x,y) = \big(255 - p(x,y)\big).\frac{R_r(x,y)}{R_{ir}(x,y)} \qquad (7)$$

où $R_r$(x, y) est le nombre de pixels de crêtes dans une zone centrée sur le pixel (x,y), et où $R_{ir}$(x, y) est le nombre de pixels de vallées dans une zone centrée sur le pixel (x,y).

Avantageusement, l'étape de localisation consiste à choisir le point origine O comme le point de l'image résultante présentant la plus forte intensité.

L'invention propose également un dispositif de validation comportant:

- une surface de capture sur laquelle ledit support vient en appui,
- un capteur destiné à capturer une image de l'empreinte digitale,
- un module de traitement comportant:
- des moyens de filtrage destinés à transformer l'image capturée en une image résultante par passage à travers un filtre passe-bas dont la fréquence de coupure est très inférieure à la fréquence des crêtes d'une empreinte,
- des moyens de localisation destinés à localiser sur l'image résultante, un point origine O dont l'intensité du pixel est représentative de la pression maximale s'exerçant sur le support,

- des moyens de vérification destinés à vérifier que, sur l'image résultante, pour une pluralité de rayons issus du point origine O, et pour chacun desdits rayons, pour une pluralité de points M, l'intensité du pixel de chaque point M dudit rayon est représentative d'une baisse de la pression s'exerçant sur le support au fur et à mesure que la distance du point origine O au point M augmente, et
- un module de prise de décision destiné à prendre une décision quant à la validité du support en fonction des résultats transmis par les moyens de vérification.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une représentation schématique d'un dispositif de validation selon l'invention,
la Fig. 2 est une image d'une empreinte digitale capturée par un dispositif de validation selon l'invention,
la Fig. 3 est un algorithme d'un procédé de validation selon l'invention,
la Fig. 4 est une image de l'empreinte digitale de la Fig. 2 telle que modifiée au cours du procédé de validation, et
la Fig. 5 montre un schéma servant de support à calcul.

Un vrai doigt présente une élasticité particulière qui fait que lorsqu'il est mis en pression contre une surface de capture, il présente une déformation homogène qui consiste en une zone de pression maximale et une baisse de la pression à mesure que l'on s'éloigne de cette zone. L'unicité de cette zone provient du fait que l'on ne peut exercer qu'une pression constante sur tout le doigt et la forme cylindrique du doigt fait que la pression diminue en se rapprochant des bords du doigt.

Lorsqu'un doigt est recouvert d'un leurre ou que le doigt est faux, l'élasticité du leurre est différente de l'élasticité d'un vrai doigt, et lorsque le leurre est mis en pression contre une surface de capture, il ne se déforme pas de manière homogène et il existe alors plusieurs zones de fortes pressions séparées par des zones de faibles pressions.

Le principe de l'invention consiste donc à rechercher un point origine de forte pression, et à vérifier qu'à partir de ce point origine la pression diminue.

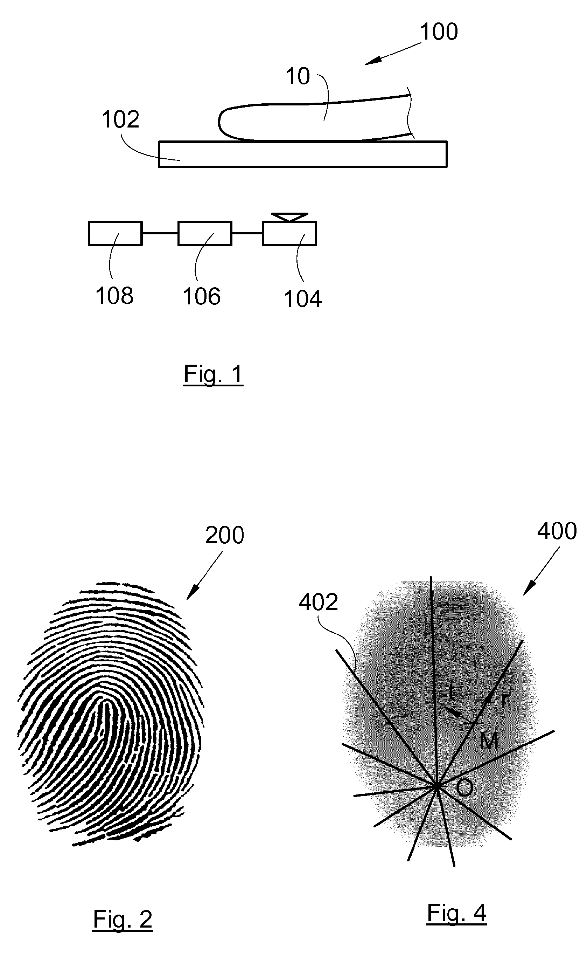

La Fig. 1 montre un dispositif de validation 100 qui est destiné à valider l'utilisation d'un vrai doigt comme porteur d'une empreinte digitale.

Le dispositif de validation 100 comporte:

- une surface de capture 102 sur laquelle un support 10 porteur d'une empreinte digitale est mis en appui,
- un capteur 104 destiné à capturer l'image de l'empreinte digitale à travers la surface de capture 102,
- un module de traitement 106 destiné à recevoir l'image de l'empreinte digitale capturée par le capteur 104 et à la traiter comme cela est décrit ci-après, et
- un module de prise de décision 108 destiné à prendre une décision sur le fait que le support 10 est un vrai doigt ou un faux doigt, à partir des informations transmises par le module de traitement 106.

La Fig. 2 est une image capturée 200 d'une empreinte telle que capturée par le capteur 104 et transmise au module de traitement 106. Classiquement, l'empreinte présente des crêtes et des vallées. Ici, l'image capturée 200 est en niveau de gris et les crêtes apparaissent ici en noir sur fond blanc.

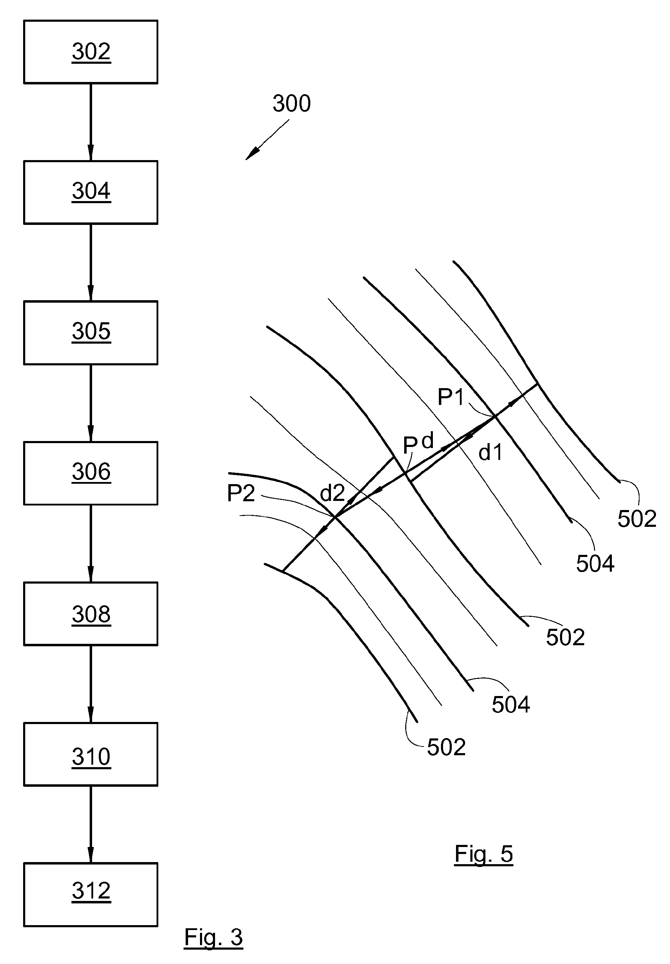

La Fig. 4 montre une image 400 qui résulte du passage de l'image capturée 200 par une étape de filtrage (306, Fig. 3). Les crêtes et les vallées ne sont plus discernables. L'image 400 est représentative des pressions qui s'exercent en tous points du support 10 et est appelée ci-après l'image résultante 400. Dans le mode de réalisation de l'invention présenté ici, plus la zone de l'image résultante 400 est claire, plus la pression qui s'exerce dans cette zone est importante.

La Fig. 3 est un algorithme d'un procédé de validation 300 mis en oeuvre par le dispositif de validation 100.

Le procédé de validation 300 comporte:

- une étape de positionnement 302 au cours de laquelle le support 10 porteur de l'empreinte est mis en appui contre la surface de capture 102,
- une étape de capture 304 au cours de laquelle le capteur 104 capture l'image capturée 200 de l'empreinte,
- une étape de filtrage 306 au cours de laquelle le module de traitement 106 transforme l'image capturée 200 en l'image résultante 400 par passage à travers un filtre passe-bas dont la fréquence de coupure est très inférieure à la fréquence des crêtes d'une empreinte,
- une étape de localisation 308 au cours de laquelle le module de traitement 106 localise sur l'image résultante 400, un point origine O dont l'intensité du pixel est représentative de la pression maximale s'exerçant sur le support 10,
- une étape de vérification 310 au cours de laquelle le module de traitement 106 vérifie que, sur l'image résultante 400, pour une pluralité de rayons 402 issus du point origine O, et pour chacun desdits rayons 402, pour une pluralité de points M, l'intensité du pixel de chaque point M dudit rayon 402 est représentative d'une baisse de la pression s'exerçant sur le support 10 au fur et à mesure que la distance du point origine O au point M augmente, et

- une étape de prise de décision 312 au cours de laquelle le module de prise de décision 108 prend une décision quant à la validité du support 10 en fonction des résultats de l'étape de vérification 310.

Le procédé de validation 300 permet donc une utilisation sans contrainte pour la personne présentant son doigt 10.

Le filtre passe-bas sera par exemple un filtre gaussien, un filtre médian, un filtre moyenneur ou tout autre filtre permettant de ne conserver que l'information basse fréquence de l'image capturée 200.

L'étape de localisation 308 consiste à choisir le point origine O comme le point de l'image résultante 400 présentant la plus forte intensité.

Le module de traitement 106 comporte:

- des moyens de filtrage destinés à transformer l'image capturée 200 en l'image résultante 400 par passage à travers un filtre passe-bas dont la fréquence de coupure est très inférieure à la fréquence des crêtes d'une empreinte,
- des moyens de localisation destinés à localiser sur l'image résultante 400, un point origine O dont l'intensité du pixel est représentative de la pression maximale s'exerçant sur le support 10, et
- des moyens de vérification destinés à vérifier que, sur l'image résultante 400, pour une pluralité de rayons 402 issus du point origine O, et pour chacun desdits rayons 402, pour une pluralité de points M, l'intensité du pixel de chaque point M dudit rayon 402 est représentative d'une baisse de la pression s'exerçant sur le support 10 au fur et à mesure que la distance du point origine O au point M augmente.

Le module de prise de décision 108 est destiné à prendre une décision quant à la validité du support 10 en fonction des résultats transmis par les moyens de vérification.

Une empreinte présente classiquement une fréquence de crêtes de l'ordre de 1,5 à 3 cycles par mm et pour obtenir une image exploitable après l'étape de filtrage 306, la fréquence de coupure qui est appliquée lors de cette étape de filtrage 306 est de l'ordre de 0,1 à 1 cycle par mm, et plus particulièrement de 0,5 cycle par mm.

Sur l'image résultante 400, l'intensité de chaque pixel est représentative de la pression qui s'exerce sur le point du support 10 dont l'image est ledit pixel.

Selon un mode de réalisation particulier de l'invention, l'étape de vérification 310 consiste à utiliser les gradients d'intensité des pixels au sein de l'image résultante 400 et à vérifier qu'à partir du point origine O et sur chaque rayon 402 issu du point origine O, le gradient d'intensité de chaque point M orienté dans la direction OM est négatif. Si le gradient est positif en s'éloignant du point origine O, cela est une indication du fait que le support 10 est peut être un faux doigt. Le gradient d'intensité correspond au gradient de pression qui s'exerce sur le support 10.

Dans la mesure où il peut arriver que, même avec un vrai doigt, le gradient remonte légèrement sur une portion d'un rayon 402, par exemple à cause d'une particularité du doigt (cicatrice,...), ou d'éclairage parasite, l'étape de prise de décision 312 est préférentiellement basée sur un critère cumulatif noté $Dism(P,O)$ et représentant l'écart du profil d'intensité du profil réel d'intensité P au modèle théorique d'intensité centré en O d'un vrai doigt, et sur une comparaison de cet écart par rapport à un seuil.

Si l'écart $Dism(P,O)$ est supérieur au seuil, le support 10 est alors considéré comme un faux doigt, et si l'écart $Dism(P,O)$ est inférieur au seuil, le support 10 est alors considéré comme un vrai doigt. Le résultat de la comparaison entre le seuil et l'écart $Dism(P,O)$ sert de base au cours de l'étape de prise de décision 312.

Une méthode consiste à travailler dans une base locale radiale en chaque point M de l'image résultante 400. La base locale radiale en M relative à O est la base $(\vec{r}, \vec{t})$ telle que $\vec{r} = \dfrac{\overrightarrow{OM}}{\|OM\|}$ et $\vec{t}$ est le vecteur unitaire orthogonal à r tel que $(O,\vec{r},\vec{t})$ soit un repère direct.

M est un point sur l'image résultante 400 et on note $\vec{\nabla}(M)$ le gradient d'intensité en M. Ce gradient exprimé dans le repère image peut être projeté sur la base locale radiale en M relative à O, et sa projection sur la base locale radiale en M relative à O sur le vecteur r s'écrit $\nabla_r^O(M)$.

Dans le cas d'un vrai doigt, c'est-à-dire dans le cas d'un profil d'intensité idéal, le profil d'intensité comporte normalement un unique maximum local noté O et tout gradient local projeté dans sa base locale radiale en M relative à O est alors et répond ainsi à l'équation:

$$\forall M, \nabla_r^O P(M) \leq 0 \qquad (1)$$

où P(M) est l'intensité au point M.

$\nabla_r^O P(M)$ est ainsi la projection sur la base locale radiale en M relative à O du gradient d'intensité au point M de l'image résultante 400.

En considérant le repère de coordonnées polaire de centre O, les coordonnées du point M dans ce repère sont $(r,\theta)$ et l'équation (1) s'écrit:

$$\forall M(r,\theta), r > 0, \theta \in [0,2\pi], \nabla_r^O P(r,\theta) \leq 0 \qquad (2).$$

Ce qui correspond au fait que le profil de gradient d'intensité suivant tout rayon 402 partant du point origine O est décroissant.

On choisit une fonction réelle L telle qu'elle soit nulle sur $\mathbb{R}^-$ et croissante sur $\mathbb{R}^+$ *.

Par exemple, on peut choisir la fonction L telle que :

$$L(x) = \begin{cases} x \ si \ x > 0 \\ 0 \ si \ x \leq 0 \end{cases}$$

L est une fonction de sélection des gradients positifs, mais une autre fonction pourrait permettre de pondérer les gradients en fonction de leur intensité.

L'écart $Dism(P,O)$ est alors donné par la formule:

$$Dism(P,O) = \frac{1}{Aire(P)} \int_0^{2\pi} \int_0^{R_{max}} L\left(\nabla_r^O P(r,\theta)\right). dr. d\theta \qquad (3)$$

où $R_{max}$ est la distance maximale entre le point origine O et tout point M de l'image résultante 400 et où $Aire(P)$ est l'aire de la région considérée autour du point M et qui est ici en pixel.

Plusieurs méthodes peuvent être utilisées pour calculer l'écart $Dism(P,O)$. Chaque méthode de calcul offre un compromis entre la vitesse de calcul et l'exactitude du calcul. En d'autres termes il est possible de choisir tous les points M pour avoir une valeur très précise de l'écart $Dism(P,O)$, mais dans ce cas le calcul est long, ou il est possible de limiter le nombre de points M pour avoir un calcul rapide mais au détriment de la précision dans le calcul.

Pour calculer exactement l'intégrale, pour chaque pixel M de l'image résultante 400, le gradient d'intensité local est calculé et projeté sur la base radiale relative au point origine O.

La somme de toutes les projections locales des gradients $\nabla_r^O P(r,\theta)$ qui sont strictement positives est effectuée. En coordonnées cartésiennes et en prenant une largeur W et une hauteur H pour l'image résultante 400, la formule (3) s'écrit:

$$Dism(P,O) = \frac{1}{Aire(P)} \sum_{x=0}^{W} \sum_{y=0}^{H} Aire\left(M(x,y)\right). L\left(\nabla_r^O P(x,y)\right) \qquad (4)$$

où L est la fonction définie ci-dessus et qui ne garde que les valeurs positives.

Cela revient à calculer les gradients locaux sur toute l'image résultante 400 et à sommer les projections sur les bases radiales locales qui sont positives.

$Aire(M(x,y))$ est l'aire de chaque zone centrée sur le point M(x,y) sur laquelle est calculé le gradient. Ici, cette aire est égale à un pixel, mais il est possible de sous-échantillonner le calcul afin de ne pas considérer tous les pixels et accélérer le calcul et dans ce cas l'aire est supérieure à 1.

Une autre méthode consiste à échantillonner les angles d'intégration et de calculer les gradients uniquement suivant les rayons choisis. Suivant chaque rayon, on calcule les gradients locaux avec une méthode d'interpolation, puis on calcule la somme des gradients positifs. Chaque gradient peut être pondéré par l'aire du secteur de couronne qu'il représente. Par exemple, dans le cas où les points de calcul des gradients sont échantillonnés de manière uniforme avec un pas de 1 pixel, et où on choisit $\Theta$ angles uniformément échantillonnés sur l'intervalle $[0,2\pi]$ et qui sont généralement au nombre de 8 ou 16, la formule (3) s'approxime par la formule :

$$Dism(P,O) \approx \frac{1}{Aire(P)} \sum_{\theta=0}^{\Theta-1} \sum_{j=1}^{R_{max}} Aire(R_j).Pos\left(\nabla_r^O P(r,\theta)\right) \qquad (5)$$

et comme l'aire d'un secteur de couronne de rayon moyen j, d'épaisseur 1 et d'angle $\frac{2\pi}{\Theta}$ vaut $\frac{2\pi}{\Theta} \times 2j$, la formule (5) devient :

$$Dism(P,O) \approx \frac{4\pi}{\Theta.Aire(P)} \sum_{\theta=0}^{\Theta-1} \sum_{j=1}^{R_{max}} j.L\left(\nabla_r^O P(r,\theta)\right) \qquad (6)$$

L'écart $Dism(P,O)$ n'est pas borné et représente les divergences avec le modèle théorique et il est alors possible de définir un seuil pour l'écart $Dism(P,O)$ au-delà duquel le module de prise de décision 108 considérera le support 10 comme un faux doigt et en-deçà duquel il considérera le support 10 comme un vrai doigt. Ce seuil pourra être déterminé à partir d'une base représentative de vrais doigts ou à partir d'une base de vrais et de faux doigts. On utilisera par exemple un réseau de neurones ou un SVM.

Le seuil de décision est défini à partir d'une mesure définie sur une base représentative de vrais doigts.

Entre l'étape de capture 304 et l'étape de filtrage 306, une étape de prétraitement 305 peut être mise en place, afin d'améliorer le rendu de l'image résultante 400.

Le module de traitement 106 comporte alors des moyens de prétraitement destinés à mettre en oeuvre l'étape de prétraitement 305.

A partir de l'image capturée 200, le module de traitement 106 détermine une image S représentative d'un squelette de crêtes (ridges) et d'un squelette de vallées (inter-ridges). Une telle détermination est décrite par exemple dans le document [Alessandro Farina, Zsolt M. Kovacs-Vajna, Alberto Leone, "Fingerprint Minutiae Extraction from Skeletonized Binary Images," Pattern Recognition, Vol. 32, pp. 877-889, 1999].

En chaque point du squelette des crêtes, le module de traitement 106 calcule la largeur locale de la crête, et en chaque point du squelette des vallées, le module de traitement 106 calcule la largeur locale de la vallée. De tels calculs sont illustrés sur la Fig. 5 qui montre des squelettes de crêtes 502 et des squelettes de vallées 504 en niveaux de gris. Pour chaque point P du squelette de crêtes 502, on mesure suivant la normale au squelette la largeur "d" de la crête correspondante, d1 et d2 étant les largeurs des vallées.

Le module de traitement 106 construit alors une matrice des crêtes et notée Rr et une matrice des vallées et notée Rir. La matrice Rr et la matrice Rir ont la même taille que l'image capturée 200 et chaque coefficient de ligne x et de colonne y correspond au pixel de ligne x et de colonne y de ladite image capturée 200 et noté (x, y).

Selon un mode de réalisation, pour chaque pixel (x, y) n'appartenant pas au squelette des crêtes, le coefficient $R_r(x, y)$ correspondant de la matrice des crêtes Rr est nul et pour chaque pixel (x, y) appartenant au squelette des crêtes, le coefficient $R_r(x, y)$ correspondant de la matrice des crêtes Rr vaut la largeur locale de la crête en ce pixel (x, y).

Pour chaque pixel (x, y) n'appartenant pas au squelette des vallées, le coefficient $R_{ir}(x, y)$ correspondant de la matrice des vallées Rir est nul et pour chaque pixel (x, y) appartenant au squelette des vallées, le coefficient $R_{ir}(x, y)$ correspondant de la matrice des vallées Rir vaut la largeur locale de la vallée en ce pixel (x, y).

Une autre méthode de définition de $R_r(x, y)$ et $R_{ir}(x, y)$ consiste à définir la densité de crêtes (resp. vallées) autour du pixel (x,y). $R_r$ peut ainsi être défini comme le nombre de pixels de crêtes dans une zone centrée sur le pixel (x,y) tandis que $R_{ir}(x, y)$ peut être défini comme le nombre de pixels de vallées dans une zone centrée sur le pixel (x,y). $R_r$ et $R_{ir}$ ne sont ainsi plus définies comme des distances comme dans la première méthode décrite mais par une notion de densité.

Une autre méthode de définition de $R_r(x, y)$ et $R_{ir}(x, y)$ est la suivante, pour chaque pixel (x, y) de l'image capturée:

- lorsque le pixel (x, y) n'appartient pas aux pixels des crêtes, $R_r(x, y)$ est égal à la valeur moyenne des largeurs locales de crêtes adjacentes de part et d'autre de la vallée incluant le pixel, au niveau dudit pixel,
- lorsque le pixel (x, y) appartient aux pixels des crêtes, $R_r(x, y)$ vaut la largeur locale de la crête en ce pixel (x, y),
- lorsque le pixel (x, y) n'appartient pas aux pixels des vallées, $R_{ir}(x, y)$ est égal à la valeur moyenne des largeurs locales de vallées adjacentes de part et d'autre de la crête incluant ce pixel, au niveau dudit pixel, et
- lorsque le pixel (x, y) appartient aux pixels des vallées, $R_{ir}(x, y)$ vaut la largeur locale de la vallée en ce pixel (x, y).

La fonction F est une fonction qui transforme l'image capturée 200 en une image prétraitée notée IP et qui est une fonction monotone de l'intensité des pixels (x, y) de l'image capturée 200, et qui est telle que pour tout pixel (x, y) de l'image capturée 200 appartenant à un des deux squelettes, le pixel (x, y) de l'image prétraitée IP prend une valeur d'intensité positive, et pour tout pixel (x, y) de l'image capturée 200 n'appartenant pas à un des deux squelettes, le pixel (x, y) de l'image prétraitée IP prend une valeur d'intensité nulle.

Par exemple, il est possible de prendre la fonction F(x, y) définie par la formule:

$$F(x, y) = \big(255 - p(x, y)\big).\frac{R_r(x,y)}{R_{ir}(x,y)} \qquad (7)$$

L'image prétraitée IP peut alors subir l'étape de filtrage 306.

Il est également possible de réaliser simultanément l'étape de prétraitement 305 et l'étape de filtrage 306. Par exemple, il est possible d'utiliser la fonction F(x, y) définie par la formule:

$$F(x, y) = G_\Sigma * \Big(\alpha\big(255 - p(x, y)\big) + \beta\,\frac{R_r(x,y)}{R_{ir}(x,y)}\Big)\text{avec } \alpha + \beta = 1 \qquad (8)$$

C'est-à-dire que la fonction F est la convolution de la somme pondérée de l'image capturée 200 et de l'image de ratio largeur des crêtes par largeur des vallées, par une gaussienne de matrice de covariance. En pratique, $\alpha$ est choisi entre 0 et 0,5.

L'image obtenue peut alors être directement assimilée à l'image résultante 400.

Il peut arriver que l'image résultante 400 présente une pluralité de points et que chacun de ces points ont une intensité du pixel qui est représentative d'une pression maximale. L'image résultante 400 comporte alors une pluralité de points origines O.

On utilise alors la notion de pression maximale locale autour de chaque point origine O. La localité de la zone de recherche pour un point origine O peut être définie par exemple par la distance minimum entre ce point d'origine et tous les autres points d'origines. Cette distance peut être ajustée par un coefficient afin que la zone soit éloignée des autres points d'origines. Une valeur pratique de ce coefficient est 2.

Dans le cas où plusieurs points origines O sont définis, l'écart peut être défini en faisant plusieurs fois le calcul d'écart pour chaque point origine O. La consolidation se fait par analyse des différents résultats sur chaque point origine O (par exemple min, max, moyenne, ...). La décision finale est faite par seuillage de l'écart défini après cette consolidation.

## Revendications

1. Procédé de validation (300) de l'utilisation d'un vrai doigt comme support (10) d'une empreinte digitale mis en oeuvre par un dispositif de validation (100) comportant une surface de capture (102) sur laquelle ledit support (10) vient en appui, un capteur (104) destiné à capturer une image (200) de l'empreinte digitale, un module de traitement (106) et un module de prise de décision (108), ledit procédé de validation (300) comportant:

   - une étape de positionnement (302) au cours de laquelle le support (10) est mis en appui contre la surface de capture (102),
   - une étape de capture (304) au cours de laquelle le capteur (104) capture une image dite capturée (200) de l'empreinte,
   - une étape de filtrage (306) au cours de laquelle le module de traitement (106) transforme l'image capturée (200) en une image résultante (400) par passage à travers un filtre passe-bas dont la fréquence de coupure est très inférieure à la fréquence des crêtes d'une empreinte,

   **caractérisé en ce que** le procédé comporte

   - une étape de localisation (308) au cours de laquelle le module de traitement (106) localise sur l'image résultante (400), un point origine O dont l'intensité du pixel est représentative de la pression maximale s'exerçant sur le support (10),
   - une étape de vérification (310) au cours de laquelle le module de traitement (106) vérifie que, sur l'image résultante (400), pour une pluralité de rayons (402) issus du point origine O, et pour chacun desdits rayons (402), pour une pluralité de points M, l'intensité du pixel de chaque point M dudit rayon (402) est représentative d'une baisse de la pression s'exerçant sur le support (10) au fur et à mesure que la distance du point origine O au point M augmente, et
- une étape de prise de décision (312) au cours de laquelle le module de prise de décision (108) prend une décision quant à la validité du support (10) en fonction des résultats de l'étape de vérification (310).

2. Procédé de validation (300) selon la revendication 1, **caractérisé en ce que** ladite fréquence de coupure est de l'ordre de de 0,1 à 1 cycle par mm.

3. Procédé de validation (300) selon l'une des revendications 1 ou 2, **caractérisé en ce que** l'étape de vérification (310) consiste à vérifier qu'à partir du point origine O et sur chaque rayon (402) issu du point origine O, le gradient d'intensité de chaque point M est négatif.

4. Procédé de validation (300) selon la revendication 3, **caractérisé en ce que** l'étape de prise de décision (312) est basée sur un critère cumulatif noté $Dism(P,O)$ et représentant l'écart du profil d'intensité du profil réel d'intensité P au modèle théorique d'intensité centré en O d'un vrai doigt et sur une comparaison de cet écart $Dism(P,O)$ par rapport à un seuil.

5. Procédé de validation (300) selon la revendication 4, **caractérisé en ce que** l'écart $Dism(P,O)$ est donné par la formule:

$$Dism(P,O) = \frac{1}{Aire(P)} \int_0^{2\pi} \int_0^{R_{max}} L(\nabla_r^O P(r,\theta)).dr.d\theta \qquad (3)$$

où:

- $\nabla_r^O P(r,\theta)$ est la projection sur la base locale radiale en M relative à O du gradient d'intensité au point M de l'image résultante (400) de coordonnées polaires $(r,\theta)$,
- L est une fonction nulle sur $\mathbb{R}^-$ et croissante sur $\mathbb{R}^{+*}$,
- $R_{max}$ est la distance maximale entre le point origine O et tout point M de l'image résultante (400), et
- $Aire(P)$ est l'aire de la région considérée autour du point M.

6. Procédé de validation (300) selon l'une des revendications 1 à 5, **caractérisé en ce qu'**il comporte une étape de prétraitement (305) destinée à améliorer le rendu de l'image résultante (400), entre l'étape de capture (304) et l'étape de filtrage (306).

7. Procédé de validation (300) selon la revendication 6, **caractérisé en ce que** l'étape de prétraitement (305) consiste à appliquer aux pixels (x, y) de l'image capturée (200), une fonction F(x, y) définie par la formule:

$$F(x,y) = \left(255 - p(x,y)\right).\frac{R_r(x,y)}{R_{ir}(x,y)} \qquad (7)$$

où lorsque le pixel (x, y) n'appartient pas aux pixels des crêtes, $R_r(x, y)$ est égal à la valeur moyenne des largeurs locales de crêtes adjacentes de part et d'autre de la vallée incluant le pixel, au niveau dudit pixel, et où lorsque le pixel (x, y) appartient aux pixels des crêtes, $R_r(x, y)$ vaut la largeur locale de la crête en ce pixel (x, y),
où lorsque le pixel (x, y) n'appartient pas aux pixels des vallées, $R_{ir}(x, y)$ est égal à la valeur moyenne des largeurs locales de vallées adjacentes de part et d'autre de la crête incluant ce pixel, au niveau dudit pixel, et où lorsque le pixel (x, y) appartient aux pixels des vallées, $R_{ir}(x, y)$ vaut la largeur locale de la vallée en ce pixel (x, y).

8. Procédé de validation (300) selon la revendication 6, **caractérisé en ce que** l'étape de prétraitement (305) consiste à appliquer aux pixels (x, y) de l'image capturée (200), une fonction F(x, y) définie par la formule:

$$F(x,y) = \left(255 - p(x,y)\right).\frac{R_r(x,y)}{R_{ir}(x,y)} \qquad (7)$$

où lorsque le pixel (x, y) n'appartient pas au squelette des crêtes, $R_r(x, y)$ est nul, et où lorsque le pixel (x, y) appartient au squelette des crêtes, $R_r(x, y)$ vaut la largeur locale de la crête en ce pixel (x, y),

où lorsque le pixel (x, y) n'appartient pas au squelette des vallées, $R_{ir}(x, y)$ est nul, et où lorsque le pixel (x, y) appartient au squelette des vallées, $R_{ir}(x, y)$ vaut la largeur locale de la vallée en ce pixel (x, y).

9. Procédé de validation (300) selon la revendication 6, **caractérisé en ce que** l'étape de prétraitement (305) consiste à appliquer aux pixels (x, y) de l'image capturée (200), une fonction F(x, y) définie par la formule:

$$F(x,y) = \left(255 - p(x,y)\right).\frac{R_r(x,y)}{R_{ir}(x,y)} \qquad (7)$$

où $R_r(x, y)$ est le nombre de pixels de crêtes dans une zone centrée sur le pixel (x,y), et
où $R_{ir}(x, y)$ est le nombre de pixels de vallées dans une zone centrée sur le pixel (x,y).

10. Procédé de validation (300) selon l'une des revendications 1 à 9, **caractérisé en ce que** l'étape de localisation (308) consiste à choisir le point origine O comme le point de l'image résultante (400) présentant la plus forte intensité.

11. Dispositif de validation (100) comportant:

- une surface de capture (102) sur laquelle ledit support (10) vient en appui,
- un capteur (104) destiné à capturer une image (200) de l'empreinte digitale,
- un module de traitement (106) comportant:
- des moyens de filtrage destinés à transformer l'image capturée (200) en une image résultante (400) par passage à travers un filtre passe-bas dont la fréquence de coupure est très inférieure à la fréquence des crêtes d'une empreinte,

**caractérisé en ce que** le dispositif comporte

- des moyens de localisation destinés à localiser sur l'image résultante (400), un point origine O dont l'intensité du pixel est représentative de la pression maximale s'exerçant sur le support (10),
- des moyens de vérification destinés à vérifier que, sur l'image résultante (400), pour une pluralité de rayons (402) issus du point origine O, et pour chacun desdits rayons (402), pour une pluralité de points M, l'intensité du pixel de chaque point M dudit rayon (402) est représentative d'une baisse de la pression s'exerçant sur le support (10) au fur et à mesure que la distance du point origine O au point M augmente, et
- un module de prise de décision (108) destiné à prendre une décision quant à la validité du support (10) en fonction des résultats transmis par les moyens de vérification.

**Patentansprüche**

1. Verfahren zum Validieren (300) der Verwendung eines echten Fingers als Träger (10) eines Fingerabdrucks, wobei das Verfahren durch eine Validierungsvorrichtung (100) umgesetzt wird, die eine Sensorfläche (102), auf der der genannte Träger (10) aufliegt, einen Sensor (104), der dazu bestimmt ist, ein Bild (200) des Fingerabdrucks zu erfassen, ein Verarbeitungsmodul (106) und ein Entscheidungsmodul (108) beinhaltet, das genannte Validierungsverfahren (300) umfassend :

- einen Positionierungsschritt (302), in dessen Verlauf der Träger (10) auf die Sensorfläche (102) aufgelegt wird,
- einen Erfassungsschritt (304), in dessen Verlauf der Sensor (104) ein, als erfasst bezeichnetes Bild (200) des Fingerabdrucks erfasst,
- einen Filterungsschritt (306), in dessen Verlauf das Verarbeitungsmodul (106) das erfasste Bild (200) durch Durchlaufen eines Tiefpassfilters, dessen Grenzfrequenz sehr viel niedriger ist, als die Frequenz der Grate eines Fingerabdrucks, in ein resultierendes Bild (400) umwandelt,

**dadurch gekennzeichnet, dass** das Verfahren folgendes umfasst:

- einen Lokalisierungsschritt (308), in dessen Verlauf das Verarbeitungsmodul (106) auf dem resultierenden Bild (400) einen Ausgangspunkt O lokalisiert, dessen Pixelintensität für den maximalen Druck, der auf den Träger (10) ausgeübt wird, repräsentativ ist
- einen Überprüfungsschritt (10), in dessen Verlauf das Verarbeitungsmodul (106) überprüft, ob auf dem resultierenden Bild (400), für eine Vielzahl von, vom Ausgangspunkt O ausgehenden Radien (402) und für jeden der genannten Radien (402), für eine Vielzahl von Punkten M, die Pixelintensität jedes Punkts M des genannten Radius (402) repräsentativ ist für eine Minderung des, auf den Träger (10) ausgeübten Drucks je weiter der Ausgangspunkt O vom Punkt M entfernt ist, und

- einen Entscheidungsschritt (312) in dessen Verlauf das Entscheidungsmodul (108) eine Entscheidung bezüglich der Validität des Trägers (10) in Abhängigkeit von den Ergebnissen des Überprüfungsschritts (310) trifft.

2. Validierungsverfahren (300) nach Patentanspruch 1, **dadurch gekennzeichnet, dass** die Grenzfrequenz 0,1 bis 1 Zyklen pro mm beträgt.

3. Valdierungsverfahren (300) nach einem der Patentansprüche 1 oder 2, **dadurch gekennzeichnet, dass** der Überprüfungsschritt (310) darin besteht, zu überprüfen, ob ausgehend von dem Ausgangspunkt O und auf jedem vom Ausgangspunkt O ausgehenden Radius (402) der Intensitätsgradient jedes Punkts M negativ ist.

4. Validierungsverfahren (300) nach Patentanspruch 3, **dadurch gekennzeichnet, dass** der Entscheidungsschritt (312) auf einem, mit $Dism(P,O)$ bewerteten kumulativen Kriterium beruht, das für die Abweichung zwischen dem Intensitätsprofil des reellen Intensitätsprofils P und dem theoretischen, in O zentrierten Intensitätsmodell eines echten Fingers repräsentativ ist, sowie auf einem Vergleich dieser Abweichung $Dism(P,O)$ mit einem Schwellenwert.

5. Validierungsverfahren (300) nach Patentanspruch 4, **dadurch gekennzeichnet, dass** die Abweichung $Dism(P,O)$ durch folgende Formel wiedergegeben wird:

$$Dism(P,O) = \frac{1}{Aire(P)} \int_0^{2\pi} \int_0^{R_{max}} L\left(\nabla_r^O P(r,\theta)\right).dr.d\theta \qquad (3)$$

wobei:

- $\nabla_r^O P(r,\theta)$ die Projektion auf der lokalen radialen Basis in M in Bezug auf O des Intensitätsgradienten im Punkt M des resultierenden Bilds (400) in Polarkoordinaten ($r,\theta$) ist,
- L eine Nullfunktion auf R- und eine ansteigende Funktion auf R+ ist,
- $R_{max}$ die maximale Entfernung zwischen dem Ausgangspunkt O und jedem Punkt M des resultierenden Bilds (400) ist, und
- Aire (P) die Fläche der betroffenen Region rund um den Punkt M ist.

6. Validierungsverfahren (300) nach einem der Patentansprüche 1 bis 5, **dadurch gekennzeichnet, dass** es einen Vorverarbeitungsschritt (305) umfasst, der dazu bestimmt ist, die Wiedergabe des resultierenden Bildes (400) zwischen dem Erfassungsschritt (304) und dem Filterungsschritt (306) zu verbessern.

7. Validierungsverfahren (300) nach Patentanspruch 6, **dadurch gekennzeichnet, dass** der Vorverarbeitungsschritt (305) darin besteht, auf die Pixel (x, y) des erfassten Bilds (200) eine Funktion F(x, y) anzuwenden, die durch die folgende Formel definiert wird

$$F(x,y) = \left(255 - p(x,y)\right).\frac{R_r(x,y)}{R_{ir}(x,y)} \qquad (7)$$

wobei, falls das Pixel (x, y) nicht zu den Pixeln der Grate gehört, $R_r(x,y)$ gleich dem Mittelwert der lokalen Breiten der Grate ist, die auf beiden Seiten an das Tal angrenzen, das das Pixel einschließt, auf gleicher Höhe wie das genannte Pixel, und falls das Pixel (x, y) zu den Pixeln der Grate gehört, $R_r(x, y)$ dem Wert der lokalen Breite des Grats in diesem Pixel (x, y) entspricht,

wobei, falls das Pixel (x, y) nicht zu den Pixeln der Täler gehört, $R_{ir}(x,y)$ gleich dem Mittelwert der lokalen Breiten der Täler ist, die auf beiden Seiten an den Grat angrenzen, der dieses Pixel einschließt, auf gleicher Höhe wie das genannte Pixel, und falls das Pixel (x, y) zu den Pixeln der Täler gehört, $R_{ir}(x,y)$ dem Wert der lokalen Breite des Tals in diesem Pixel (x, y) entspricht.

8. Validierungsverfahren (300) nach Patentanspruch 6, **dadurch gekennzeichnet, dass** der Vorverarbeitungsschritt (305) darin besteht, auf die Pixel (x, y) des erfassten Bilds (200) eine Funktion (x, y) anzuwenden, die durch die folgende Formel definiert wird:

$$F(x,y) = \left(255 - p(x,y)\right) \cdot \frac{R_T(x,y)}{R_{ir}(x,y)} \qquad (7)$$

wobei, falls das Pixel (x, y) nicht zum Skelett der Grate gehört, $R_r(x,y)$ gleich Null ist und falls das Pixel (x, y) zum Skelett der Grate gehört, $R_{ir}(x,y)$ dem Wert der lokalen Breite des Tals in diesem Pixel (x, y) entspricht.

wobei, falls das Pixel (x, y) nicht zum Skelett der Täler gehört, $R_{ir}(x,y)$ gleich Null ist, und wobei, falls das Pixel (x,y) zum Skelett der Täler gehört, $R_{ir}(x,y)$ dem Wert der lokalen Breite des Tals in diesem Pixel (x, y) entspricht.

9. Validierungsverfahren (300) nach Patentanspruch 6, **dadurch gekennzeichnet, dass** der Vorverarbeitungschritt (305) darin besteht, auf die Pixel (x, y) eines erfassten Bilds (200) eine Funktion (x, y) anzuwenden die durch folgende Formel definiert wird:

$$F(x,y) = \left(255 - p(x,y)\right) \cdot \frac{R_T(x,y)}{R_{ir}(x,y)} \qquad (7)$$

wobei $R_r(x,y)$ die Anzahl von Gratpixeln in einer auf das Pixel (x,y) zentrierten Zone ist, und
wobei $R_{ir}(x,y)$ die Anzahl von Talpixeln in einer auf das Pixel (x,y) zentrierten Zone ist.

10. Validierungsverfahren (300) nach einem der Patentansprüche 1 bis 9, **dadurch gekennzeichnet, dass** der Lokalisierungsschritt (308) darin besteht, den Ausgangspunkt O als Punkt des, für die stärkste Intensität repräsentativen resultierenden Bilds zu wählen.

11. Validierungsvorrichtung (100) umfassend:

- eine Sensorfläche (102), auf der der genannte Träger (10) zur Auflage kommt,
- einen Sensor (104), der dazu bestimmt ist, ein Bild (200) des Fingerabdrucks zu erfassen,
- ein Verarbeitungsmodul (106) umfassend :

- Filterungsmittel, die dazu bestimmt sind, das erfasste Bild (200) durch Durchlaufen eines Tiefpassfilters, dessen Grenzfrequenz sehr viel niedriger ist, als die Frequenz der Grate eines Fingerabdrucks, in ein resultierendes Bild (400) umzuwandeln, **dadurch gekennzeichnet, dass** die Vorrichtung folgendes umfasst :
- Lokalisierungsmittel, die dazu bestimmt sind, auf dem resultierenden Bild (400), einen Ausgangspunkt O zu lokalisieren, dessen Pixelintensität für den, auf den Träger (10) ausgeübten maximalen Druck repräsentativ ist,
- Überprüfungsmittel, die dazu bestimmt sind, zu überprüfen, ob auf dem resultierenden Bild (400), für eine Vielzahl von, vom Ausgangspunkt O ausgehenden Radien (402) und für jeden der geannten Radien (402), für eine Vielzahl von Punkten M, die Intensität des Pixels jedes Punkts M des genannten Radius (402) für eine Minderung des auf den Träger (10) ausgeübten Drucks je weiter der Ausgangspunkt O vom Punkt M entfernt ist, repräsentativ ist, und
- ein Entscheidungsmodul (108), das dazu bestimmt ist, abhängig von den, durch die Überprüfungsmittel übertragenen Ergebnissen eine Entscheidung bezüglich der Validität des Trägers (10) zu treffen.

**Claims**

1. Method of validation (300) of the use of a real finger as support (10) of a fingerprint, implemented by a validation device (100) comprising a capture surface (102) on which said support (10) bears, a sensor (104) intended to capture an image (200) of the fingerprint, a processing module (106) and a decision taking module (108), said method of validation (300) comprising:

- a positioning step (302) during which the support (10) is placed such that it bears against the capture surface (102),
- a capture step (304) during which the sensor (104) captures a so-called captured image (200) of the print,

- a filtering step (306) during which the processing module (106) transforms the captured image (200) into a resulting image (400) by passage through a low-pass filter whose cutoff frequency is much lower than the frequency of the ridges of a print,

**characterized in that** the method comprises

- a locating step (308) during which the processing module (106) locates on the resulting image (400), an origin point O, where the intensity of the pixel is representative of the maximum pressure exerted on the support (10),
- a verification step (310) during which the processing module (106) verifies that, on the resulting image (400), for a plurality of radii (402) issuing from the origin point O, and for each of said radii (402), for a plurality of points M, the intensity of the pixel of each point M of said radius (402) is representative of a decline in the pressure exerted on the support (10) as the distance from the origin point O to the point M increases, and
- a decision taking step (312) during which the decision taking module (108) takes a decision as regards the validity of the support (10) as a function of the results of the verification step (310).

2. Method of validation (300) according to Claim 1, **characterized in that** said cutoff frequency is of the order of from 0.1 to 1 cycle per mm.

3. Method of validation (300) according to one of Claims 1 or 2, **characterized in that** the verification step (310) consists in verifying that starting from the origin point O and on each radius (402) issuing from the origin point O, the intensity gradient of each point M is negative.

4. Method of validation (300) according to Claim 3, **characterized in that** the decision taking step (312) is based on a cumulative criterion denoted *Dism*(*P,O*) and representing the deviation of the intensity profile of the real intensity profile P from the theoretical model of intensity centered at O of a real finger and on a comparison of this deviation *Dism*(*P,O*) with respect to a threshold.

5. Method of validation (300) according to Claim 4, **characterized in that** the deviation *Dism*(*P,O*) is given by the formula:

$$Dism(P,O) = \frac{1}{Area(P)} \int_0^{2\pi} \int_0^{Rmax} L\left(\nabla_r^O P(r,\theta)\right).dr.d\theta \qquad (3)$$

where:
- $\mathbb{R}^+$ is the projection on the radial local basis at M relating to O of the intensity gradient at the point M of the resulting image (400) with polar coordinates (*r,θ*),
- L is a zero function on $\mathbb{R}^-$ and an increasing function on $\mathbb{R}^{+*}$,
- $R_{max}$ is the maximum distance between the origin point O and any point M of the resulting image (400), and
- *Area*(*P*) is the area of the region considered around the point M.

6. Method of validation (300) according to one of Claims 1 to 5, **characterized in that** it comprises a preprocessing step (305) intended to improve the rendition of the resulting image (400), between the capture step (304) and the filtering step (306).

7. Method of validation (300) according to Claim 6, **characterized in that** the preprocessing step (305) consists in applying to the pixels (x, y) of the captured image (200), a function F(x, y) defined by the formula:

$$F(x,y) = \left(255 - p(x,y)\right).\frac{R_r(x,y)}{R_{ir}(x,y)} \qquad (7)$$

where when the pixel (x, y) does not belong to the pixels of the ridges, $R_r(x, y)$ is equal to the average value of the local widths of adjacent ridges on either side of the valley including the pixel, at the level of said pixel, and where when the pixel (x, y) belongs to the pixels of the ridges, $R_r(x, y)$ equals the local width of the ridge at this pixel (x, y), where when the pixel (x, y) does not belong to the pixels of the valleys, $R_{ir}(x, y)$ is equal to the average value of the local widths of adjacent valleys on either side of the ridge including this pixel, at the level of said pixel, and where when the pixel (x, y) belongs to the pixels of the valleys, $R_{ir}$(x, y) equals the local width of the valley at this pixel (x, y).

8. Method of validation (300) according to Claim 6, **characterized in that** the preprocessing step (305) consists in applying to the pixels (x, y) of the captured image (200), a function F(x, y) defined by the formula:

$$F(x, y) = \left(255 - p(x, y)\right).\frac{R_r(x,y)}{R_{ir}(x,y)} \qquad (7)$$

where when the pixel (x, y) does not belong to the skeleton of the ridges, $R_r$(x, y) is zero, and where when the pixel (x, y) belongs to the skeleton of the ridges, $R_r$(x, y) equals the local width of the ridge at this pixel (x, y), where when the pixel (x, y) does not belong to the skeleton of the valleys, $R_{ir}$(x, y) is zero, and where when the pixel (x, y) belongs to the skeleton of the valleys, $R_{ir}$(x, y) equals the local width of the valley at this pixel (x, y).

9. Method of validation (300) according to Claim 6, **characterized in that** the preprocessing step (305) consists in applying to the pixels (x, y) of the captured image (200), a function F(x, y) defined by the formula:

$$F(x, y) = \left(255 - p(x, y)\right).\frac{R_r(x,y)}{R_{ir}(x,y)} \qquad (7)$$

where $R_r$(x, y) is the number of pixels of ridges in a zone centered on the pixel (x,y), and where $R_{ir}$(x, y) is the number of pixels of valleys in a zone centered on the pixel (x,y).

10. Method of validation (300) according to one of Claims 1 to 9, **characterized in that** the locating step (308) consists in choosing the origin point O as the point of the resulting image (400) exhibiting the highest intensity.

11. Validation device (100) comprising:

   - a capture surface (102) on which said support (10) bears,
   - a sensor (104) intended to capture an image (200) of the fingerprint,
   - a processing module (106) comprising:

      - filtering means intended to transform the captured image (200) into a resulting image (400) by passage through a low-pass filter whose cutoff frequency is much lower than the frequency of the ridges of a print,

   **characterized in that** the device comprises

      - locating means intended to locate on the resulting image (400), an origin point O, where the intensity of the pixel is representative of the maximum pressure exerted on the support (10),
      - verification means intended to verify that, on the resulting image (400), for a plurality of radii (402) issuing from the origin point O, and for each of said radii (402), for a plurality of points M, the intensity of the pixel of each point M of said radius (402) is representative of a decline in the pressure exerted on the support (10) as the distance from the origin point O to the point M increases, and
      - a decision taking module (108) intended to take a decision as regards the validity of the support (10) as a function of the results transmitted by the verification means.

Fig. 1

Fig. 2

Fig. 4

302

304

305

306

308

310

312

Fig. 3

300

P1

P d

d1

P2

d2

502

504

502

504

502

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100066697 A

**Littérature non-brevet citée dans la description**

- **ALESSANDRO FARINA ; ZSOLT M. KOVACS-VAJNA ; ALBERTO LEONE.** Fingerprint Minutiae Extraction from Skeletonized Binary Images. *Pattern Recognition,* 1999, vol. 32, 877-889